(19) Europäisches Patentamt
European Patent Office
Office européen des brevets

(11) Veröffentlichungsnummer: **0 088 726**
**A1**

(12) # EUROPÄISCHE PATENTANMELDUNG

(21) Anmeldenummer: **83810081.6**

(22) Anmeldetag: **28.02.83**

(51) Int. Cl.[3]: **C 09 B 29/20**, C 09 B 43/32
// C09B29/01, C08K5/23

(30) Priorität: **04.03.82 CH 1327/82**

(43) Veröffentlichungstag der Anmeldung: **14.09.83**
**Patentblatt 83/37**

(84) Benannte Vertragsstaaten: **CH DE FR GB IT LI**

(71) Anmelder: **CIBA-GEIGY AG, Patentabteilung Postfach, CH-4002 Basel (CH)**

(72) Erfinder: **Ronco, Karl, Dr., In der Au 11, CH-4125 Riehen (CH)**

(54) **Neue Monoazopigmente, Verfahren zu deren Herstellung und Verwendung.**

(57) Monoazopigmente der Formel

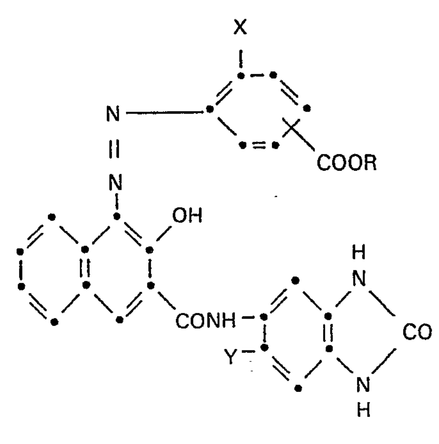

worin R einen fluorhaltigen $C_2$-$C_6$-Alkylrest, X Wasserstoff, Chlor, $C_1$-$C_2$-Alkyl, $C_1$-$C_2$-Alkoxy, Y Wasserstoff, Chlor, $C_1$-$C_2$-Alkyl, $C_1$-$C_2$-Alkoxy oder Trifluormethyl bedeuten, ergeben in Kunststoffen und Lacken reine und farbstarke rote Färbungen von hervorragender Migrations- und Licht- und Wetterechtheit.

EP 0 088 726 A1

CIBA-GEIGY AG
Basel (Schweiz)

3-13828/+

# Neue Monoazopigmente, Verfahren zu deren Herstellung und Verwendung

Die vorliegende Erfindung betrifft Monoazopigmente der Formel

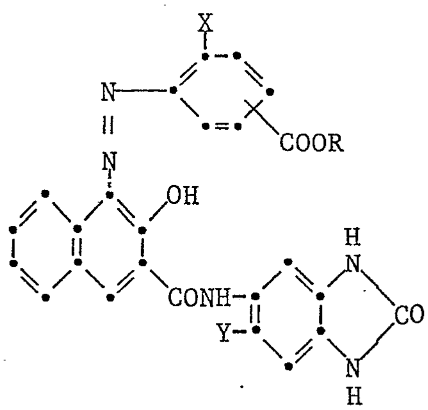

1)

worin R einen fluorhaltigen $C_2$-$C_6$-Alkylrest, X H, Chlor, $C_1$-$C_2$-Alkyl, $C_1$-$C_2$-Alkoxy, Y H, Chlor, $C_1$-$C_2$-Alkyl, $C_1$-$C_2$-Alkoxy oder Trifluormethyl bedeuten.

Der Rest R enthält vorzugsweise 3 bis 6 Fluoratome. Als Beispiele seien die folgenden Reste genannt: $-CH_2CF_2CHF_2$, $-CH_2CF_2CHFCF_3$, $-CH_2(C_2F_4)_nH$, worin n = 1-3 und insbesondere $-CH_2CF_3$.

X steht vorzugsweise für eine Methylgruppe und Y für ein Chloratom.

Die Gruppe -COOR steht bevorzugt in p-Stellung zu X.

Zu den neuen Pigmenten gelangt man, wenn man
a) die Diazoverbindung eines Amins der Formel

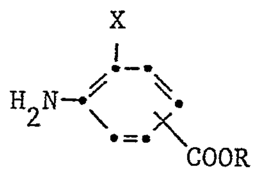

2)

mit einem Naphthol der Formel

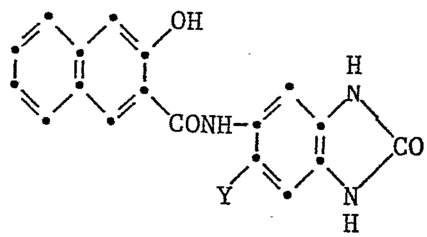

3)

kuppelt, oder

b) ein Azocarbonsäurechlorid der Formel

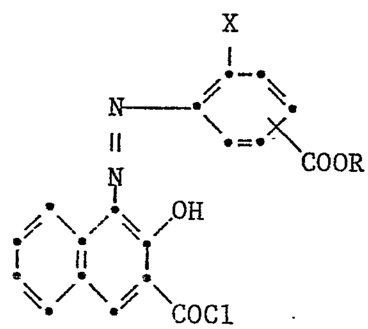

4)

mit einem Amin der Formel

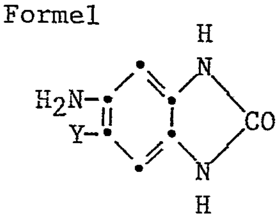

5)

kondensiert.

Die Amine der Formel 2) erhält man zweckmässig durch Kondensation einer Nitrocarbonsäure der Formel

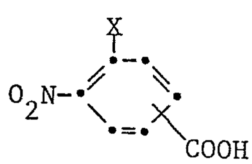

6)

mit einem Alkohol der Formel ROH und Reduktion des erhaltenen Esters zum Amin. Die Reduktion erfolgt zweckmässig katalytisch.

Als Beispiele von Nitrocarbonsäuren der Formel 6) seien genannt.

1-Nitro-2-chlorbenzol-5-carbonsäure
1-Nitro-2-methylbenzol-5-carbonsäure
1-Nitro-2-methoxybenzol-5-carbonsäure
1-Nitro-2-äthoxybenzol-5-carbonsäure
1-Nitrobenzol-3-carbonsäure
1-Nitrobenzol-2-carbonsäure.

Die Naphthole der Formel 3) stellen bekannte Verbindungen dar, die man erhält durch Kondensation von 2,3-Hydroxynaphthoesäurechlorid mit dem entsprechenden Aminobenzimidazolon, beispielsweise

5-Amino-benzimidazolon
5-Amino-6-chlor-benzimidazolon
5-Amino-6-methyl-benzimidazolon
5-Amino-6-methoxy-benzimidazolon.

Die erwähnten heterocyclischen Amine stellen bekannte Verbindungen dar.

Die Azocarbonsäure, die dem Halogenid der Formel 4) zugrunde liegt, erhält man durch Kuppeln der Diazoverbindung eines Amins der Formel 2) mit 2,3-Hydroxynaphthoesäure.

Diazotierung und Kupplung erfolgen nach bekannten Methoden.

Die erhaltenen Azofarbstoffcarbonsäuren werden nach bekannten Methoden in die Carbonsäurechloride übergeführt.

Die Kondensation zwischen den Carbonsäurechloriden der eingangs genannten Art und den Aminen erfolgt ebenfalls nach bekannten Methoden.

Die erfindungsgemässen Pigmente können z.T. als Rohprodukte verwendet werden. Falls erwünscht, kann man jedoch die Rohprodukte durch Mahlen oder Kneten in eine feindisperse Form überführen. Dabei werden zweckmässig Mahlhilfsmittel, wie anorganische und/oder Salze in Gegenwart oder Abwesenheit organischer Lösungsmittel verwendet. Nach dem Mahlen werden Hilfsmittel wie üblich entfernt, lösliche anorganische Salze z.B. mit Wasser und wasserunlösliche organische Hilfsmittel beispielsweise durch Wasserdampfdestillation. Auch durch Behandeln der Rohpigmente mit organischen Lösungsmitteln, vorzugsweise solchen, die über 100°C sieden, kann, wenn erwünscht, oft eine Verbesserung der Eigenschaften erreicht werden. Als besonders geeignete erweisen sich, durch Halogenatome, Alkyl- oder Nitrogruppen substituierte Benzole, wie Xylole, Chlorbenzol, o-Dichlorbenzol oder Nitrobenzol sowie Pyridinbasen, wie Pyridin, Picolin oder Chinolin, ferner Ketone, wie Cyclohexanon, Aether, wie Aethylenglykolmonomethyl- oder monoäthyläther, Amide, wie Dimethylformamid oder N-Methyl-pyrrolidon, sowie Dimethylsulfoxyd, Sulfolan oder Wasser allein, gegebenenfalls unter Druck. Man kann die Nachbehandlung auch in Wasser in Gegenwart von organischen Lösungsmitteln und/oder mit Zusatz von oberflächenaktiven Substanzen durchführen.

Die Nachbehandlung erfolgt vorzugsweise durch Erhitzen des Pigmentes im Wasser oder Lösungsmittel auf 100 bis 200°C, wobei in gewissen Fällen eine Kornvergröberung und gegebenenfalls eine Kristallmodifikationsumwandlung eintritt, was sich günstig auf die Licht- und Migrationsechtheit der erhaltenen Pigmente auswirkt.

Die erfindungsgemässen Pigmente eignen sich zum Pigmentieren von hochmolekularen Verbindungen, z.B. Celluloseäthern und -estern, wie Aethylcellulose, Acetylcellulose, Nitrocellulose, Polyamiden bzw. Polyurethanen oder Polyestern, natürlichen Harzen oder Kunstharzen, z.B. Aminoplasten, insbesondere Harnstoff- und Melamin-Formaldehydharzen, Alkydharzen, Phenoplasten, Polycarbonaten, Polyolefinen, wie Polystyrol, Polyvinylchlorid, Polyäthylen, Polypropylen, Polyacrylnitril, Polyacrylsäureester, thermoplastische oder härtbare Acrylharze, Gummi, Casein, Silikon und Silikonharzen, einzeln oder in Mischungen. Die erwähnten hochmolekularen Verbindungen können als plastische Massen, Schmelzen oder in Form von Spinnlösungen, Lacken oder Druckfarben vorliegen. Je nach Verwendungszweck erweist es sich als vorteilhaft, die Pigmente als Toner oder in Form von Präparaten zu verwenden. Schliesslich können die neuen Pigmente auch als photoelektrophoretische Toner verwendet werden.

Zum Pigmentieren von Lacken und Druckfarben werden die hochmolekularen organischen Materialien und die Verbindungen der Formel (1) gegebenenfalls zusammen mit Zusatzstoffen wie Füllmitteln, anderen Pigmenten, Siccativen oder Weichmachern, in einem gemeinsamen organischen Lösungsmittel oder Lösungsmittelgemisch fein dispergiert bzw. gelöst. Man kann dabei so verfahren, dass man die einzelnen Komponenten für sich oder auch mehrere gemeinsam dispergiert bzw. löst, und erst hierauf alle Komponenten zusammenbringt.

Die pigmentierten hochmolekularen organischen Materialien enthalten im allgemeinen Mengen von 0,001 bis 30 Gew.-% einer Verbindung der Formel (I), bezogen auf den zu pigmentierenden hochmolekularen organischen Stoff; dabei enthalten Polyplaste und Lacke vorzugsweise 0,1 - 5 Gew.-%, Druckfarben vorzugsweise 10 - 30 Gew.-%. Die zu wählende Menge an Pigment richtet sich in erster Linie nach der gewünschten Farbstärke, ferner nach der Schichtdicke des Formlings und schliesslich gegebenenfalls auch nach dem Gehalt an Weisspigment im Polymeren.

Die erhaltenen roten Färbungen, beispielsweise in Kunststoffen, Fasern und Lacken zeichnen sich durch sehr grosse Farbstärke, hohe Opazität, gute Dispergierbarkeit, gute Ueberlackier-, Migrations-, Hitze-, Licht- und Wetterechtheit sowie durch einen guten Glanz, gutes IR-Remissionsverhalten und insbesondere eine gute Wetterechtheit in Hart-PVC, auch in feiner Präparateform, aus. Gegenüber dem in der

CH-PS 625.819 beschriebenen Monoazopigmenten zeichnen sich die erfindungsgemässen Pigmente durch eine bessere Licht- und Wetterechtheit aus.

In den nachfolgenden Beispielen bedeuten die Teile, sofern nichts anderes angegeben wird, Gewichtsteile, die Prozente Gewichtsprozente, und die Temperaturen sind in Celsiusgraden angegeben.

Beispiel 1: 21,6 Teile der Azofarbstoffcarbonsäure, die man durch Kupplung von diazotiertem 3-Amino-4-methylbenzoesäure-2',2',2'-trifluor-äthylester mit 2,3-Hydroxynaphthoesäure erhält, werden in 150 Vol.-Teilen Chlorbenzol aufgeschlämmt und mit 0,2 Vol.-Teilen Dimethylformamid und 5 Vol.-Teilen Thionylchlorid versetzt. Man erwärmt auf 110°, rührt während einer Stunde bei 110° bis 115°, nutscht bei 10° ab und wäscht den Nutschkuchen mit Benzol und anschliessend mit Petroläther. Nach dem Trocknen erhält man 17,5 Teile des Azofarbstoffcarbonsäurechlorides der Formel

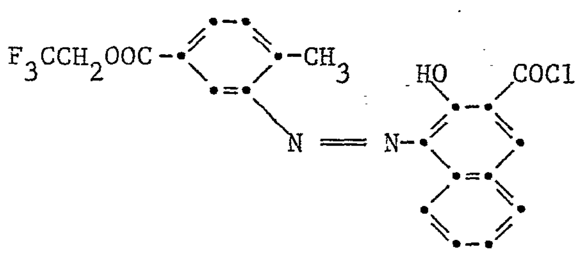

1,72 Teile 5-Aminobenzimidazolon werden bei 100° mit 7 Vol.-Teilen N-Methylpyrrolidon und 0,8 Vol.-Teilen Pyridin gelöst und zu einer Lösung von 4,51 Teilen des gemäss Absatz 1 erhaltenen Azofarbstoffcarbonsäurechlorides in 250 Vol.-Teilen o-Dichlorbenzol gegeben. Man erwärmt auf 140-145° und rührt während 6 Stunden bei dieser Temperatur. Dann wird die Suspension abfiltriert und das erhaltene Pigment nacheinander mit heissen N-Methylpyrrolidon, o-Dichlorbenzol, Methanol und Wasser gewaschen und getrocknet. Man erhält 4,65 Teile des roten, feinkristallinen Pigmentes der Formel

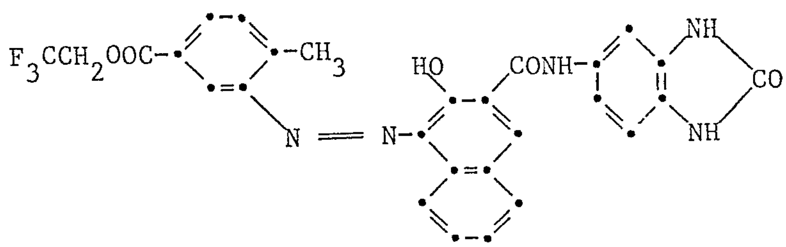

das sich gut dispergieren lässt und eine ausgezeichnete Migrations-, Ueberlackier-, Licht- und Wetterbeständigkeit aufweist.

In der nachstehenden Tabelle sind weitere Monoazopigmente beschrieben, welche erhalten werden, wenn man nach den Angaben des Beispiels 1 die Diazoverbindung des in Kolonne I genannten Amins mit 2,3-Hydroxynaphthoesäure kuppelt, die erhaltene Azofarbstoffcarbonsäure ins Säurechlorid überführt und letzteres mit dem in Kolonne II erwähnten Amin kondensiert. Kolonne III bezeichnet den Farbton einer mit 0,2% dieses Pigmentes gefärbten Polyvinylchloridfolie.

Tabelle 1

| Beispiel | I | II | III |
|---|---|---|---|
| 2 | 3-Amino-4-methylbenzoesäure-2',2',2'-trifluor-äthylester | 5-Amino-6-methyl-benzimidazolon | rot |
| 3 | 3-Amino-4-methylbenzoesäure-2',2',2'-trifluor-äthylester | 5-Amino-6-chlor-benzimidazolon | rot |
| 4 | 3-Amino-4-methylbenzoesäure-2',2',2'-trifluor-äthylester | 5-Amino-6-methoxy-benzimidazolon | braun |
| 5 | 3-Amino-4-methylbenzoesäure-2',2',2'-trifluor-äthylester | 5-Amino-1-methyl-benzimidazolon | rot |
| 6 | 3-Amino-4-chlorbenzoesäure-2',2',2'-trifluor-äthylester | 5-Aminobenzimidazolon | braun |
| 7 | 3-Amino-4-chlorbenzoesäure-2',2',2'-trifluor-äthylester | 5-Amino-6-chlor-benzimidazolon | rot |
| 8 | 3-Amino-4-chlorbenzoesäure-2',2',2'-trifluor-äthylester | 5-Amino-6-methyl-benzimidazolon | braun |
| 9 | 3-Amino-4-methylbenzoesäure-2',2',3',3'-tetra-fluor-propylester | 5-Amino-6-chlor-benzimidazolon | rotbraun |
| 10 | 3-Amino-4-chlorbenzoesäure-2',2',3',4',4',4'-hexafluor-butylester | 5-Amino-6-chlor-benzimidazolon | gelbbraun |
| 11 | 3-Amino-benzoesäure-2',2',2'-trifluor-äthylester | 5-Amino-6-chlor-benzimidazolon | rot |

Beispiel 12: 23,4 Teile 3-Amino-4-methylbenzoesäure-2',2',2'-trifluoräthylester werden in 100 Vol.-Teilen Eisessig bei Raumtemperatur verrührt, nach ca. 5 Minuten versetzt man die vollständig klare Lösung mit 25 Vol.-Teilen konz. Salzsäure und 100 Teile Wasser. Die Lösung wird mit Eis auf 0° gekühlt, während 15 Minuten bei 0-5° mit 25,5 Vol.-Teilen 4-N-Natriumnitritlösung versetzt, anschliessend mit 150 Vol.-Teilen Eiswasser verdünnt. Nach ca. 1 Stunde Nachrühren bei 0 -5° korrigiert man mit Sulfaminsäure den Ueberschuss an Nitrit vollständig weg, anschliessend wird klarfiltriert.

31,9 Teile 5-(2'-Hydroxy-3'-naphthoylamino)-benzimidazolon werden in 20 Vol.-Teilen 30%-iger Natronlauge und 350 Vol.-Teilen Wasser bei Raumtemperatur gelöst, mit 2 Teilen Kieselgur versetzt und anschliessend klarfiltriert.

In die Kupplungslösung werden 7,5 Vol.-Teile 30%-iger Salzsäure und dann noch 20 Teile Soda calz. zugegeben. Bei 15-20° wird in ca. 30 Minuten die Diazolösung zur Kupplungskomponente gegeben. Der pH-Wert fällt von 12,2 bis 3,9 nach beendeter Diazozugabe. Man lässt noch 8-12 Stunden bei 20-25° nachrühren, heizt dann auf 80°, filtriert das Pigment ab, wäscht mit heissem Wasser und anschliessend mit kaltem Isopropanol nach. Das Filtergut wird im Vakuum bei 70-80° getrocknet. Man erhält 50,0 Teile ( 87% d.Th.) eines roten Pigmentes, welches PVC in roten Tönen färbt.

Durch Nachbehandlung in Dimethylformamid oder N-Methyl-2-pyrrolidon (30 Minuten bei Siedetemperatur) erfolgt eine Form- und Echtheitsverbesserung und man erhält ein Pigment, welches von PVC in einem Rotton von sehr guter Migrations-, Licht- und Wetterechtheit färbt. Die gleichen Resultate erhält man auch durch 6-stündiges Erhitzen des Rohpigmentes in Wasser mit 1% eines Kondensationsprodukts aus 20 Mol Aethylenoxyd und 1 Mol Oleylalkohol als Zusatz bei 150° unter Druck.

In nachstehender Tabelle 2 sind weitere Pigmente beschrieben die nach den Angaben des Beispiels 9 durch Kuppeln der Diazoverbindung des in Kolonne I aufgeführten Amins mit der 2-Hydroxy-3-naphthoesäurearylidverbindung der Kolonne II und anschliessender Nachbehandlung mit dem in Kolonne IV angegebenen Lösungsmittel erhalten werden, wobei in Kolonne IV die Abkürzung NMP für N-Methyl-2-pyrrolidon und DMFA für Dimethylformamid stehen. Kolonne III gibt den Farbton einer mit 0,2% dieser Pigmente gefärbten PVC-Folie an.

Tabelle 2

| Beispiel | I | II | III | IV |
|---|---|---|---|---|
| 13 | 3-Amino-4-methylbenzoesäure-2',2',2'-trifluoräthylester | 5-(2'-Hydroxy-3'-naphthoylamino)-6-methyl-benzimidazolon | rot | NMP |
| 14 | 3-Amino-4-methylbenzoesäure-2',2',2'-trifluoräthylester | 5-(2'-Hydroxy-3'-naphthoylamino)-6-chlor-benzimidazolon | rot | NMP |
| 15 | 3-Amino-4-chlorbenzoesäure-2',2',3',-4',4',4'-hexafluor-butylester | 5-(2'-Hydroxy-3'-naphthoylamino)-benzimidazolon | braun | NMP |
| 16 | 3-Amino-4-chlorbenzoesäure-2',2',3',-4',4',4'-hexafluor-butylester | 5-(2'-Hydroxy-3'-naphthoylamino)-6-methyl-benzimidazolon | braun | NMP |
| 17 | 3-Amino-4-methylbenzoesäure-2',2',3',3'-tetrafluor-propylester | 5-(2'-Hydroxy-3'-naphthoylamino)-6-chlor-benzimidazolon | rotbraun | NMP |
| 18 | 3-Amino-4-chlorbenzoesäure-2',2',3',3'-tetrafluor-propylester | 5-(2'-Hydroxy-3'-naphthoylamino)-benzimidazolon | braun | NMP |
| 19 | 3-Amino-4-chlorbenzoesäure-2',2',3',3'-tetrafluor-propylester | 5-(2'-Hydroxy-3'-naphthoylamino)-6-methyl-benzimidazolon | braun | NMP |
| 20 | 3-Amino-benzoesäure-2',2',2'-trifluor-äthylester | 5-(2'-Hydroxy-3'-naphthoylamino)-6-chlor-benzimidazolon | rot | DMF |

Tabelle 2 (Fortsetzung)

| Beispiel | I | II | III | IV |
|---|---|---|---|---|
| 21 | 3-Amino-4-methylbenzoesäure-2',2',3',-4',4',4'-hexafluor-butylester | 5-(2'-Hydroxy-3'-naphthoylamino)-benzimidazolon | rot-braun | DMF |
| 22 | 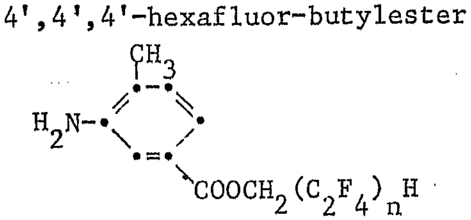<br>n = 1-3 | 5-(2'-Hydroxy-3'-napthoylamino)-6-chlor-benzimidazolon | rot-braun | DMF<br>DMF |
| 23 | dito | 5-(2'-Hydroxy-3'-napthoylamino)-benzimidazolon | rot-braun | DMF |

Beispiel 24: 0,6 g des nach Beispiel 1 hergestellten Pigments werden mit 67 g Polyvinylchlorid, 33 g Dioctylphthalat, 2 g Dibutylzinndilaurat und 2 g Titandioxyd zusammengemischt und auf einem Walzenstuhl während 15 Minuten bei 160°C zu einer dünnen Folie verarbeitet. Die so erzeugte rote Färbung ist farbstark, migrations- und lichtecht.

Beispiel 25: 1,00 g des nach Beispiel 1 hergestellten Pigments wird mit 4,00 g Druckfirnis der Zusammensetzung

| | | |
|---|---|---|
| 29,4 % | Leinöl-Standöl | (300 Poise), |
| 67,2 % | Leinöl-Standöl | ( 20 Poise), |
| 2,1 % | Kobaltoctoat | ( 8 % Co) und |
| 1,3 % | Bleioctoat | ( 24 % Pb) |

auf einer Engelsmann-Anreibmaschine fein angerieben und hierauf mit Hilfe eines Klischees im Buchdruckverfahren mit 1 $g/m^2$ auf Kunstdruckpapier gedruckt. Man erhält einen starken, reinen Rotton mit guter Transparenz und gutem Glanz.

Das Pigment eignet sich auch für andere Druckverfahren, wie Tiefdruck, Offsetdruck, Flexodruck und ergibt hier ebenfalls sehr gute Resultate.

Beispiel 26: 15 g einer 35% Butanol enthaltenden Kollodiumwolle, 15 g eines mit Ricinusäl modifizierten Phthalatharzes, 15 g einer 70%-igen butanolischen Lösung eines Harnstofflackharzes, 20 g Butylacetat, 10 g Glykolmonoäthyläther, 20 g Toluol und 5 G Alkohol werden zu einem Lack verarbeitet. Dieser wird anschliessend mit 2 g des Farbstoffs gemäss Beispiel 1 und 2 g des Titandioxyd (Rutil) pigmentiert und gemahlen. Nach dem Spritzen auf Karton und Trocknen des Lackes erhält man einen roten Ueberzug von sehr guter Licht-, Ueberlackier- und Wetterechthiet.

Beispiel 27: Zu 100 g eines Einbrennlackes, der aus 58,5 g einer 60%-igen Lösung eines Kokosalkydharzes (Beckosol 72/320) in Xylol, 23 g einer 65%-igen Lösung eines Melaminlackharzes (Super Beckamin

13/501) in Butanol, 17 g Xylol und 1,5 g Butanol besteht, gibt man 1 g des Farbstoffes gemäss Beispiel 1 und 5 g Titandioxyd. Man mahlt das Gemisch 48 Stunden in einer Kugelmühle und spritzt den so pigmentierten Lack auf eine gereinigte Metalloberfläcke. Nach dem Einbrennen bei 120° erhält man eine rote Färbung von sehr guter Licht-, Ueberlackier- und Wetterechtheit.

Patentansprüche

1. Monoazopigmente der Formel

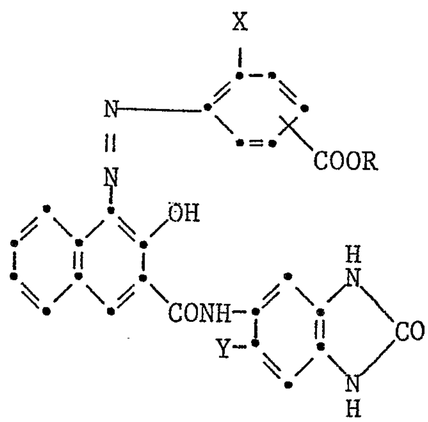

worin R einen fluorhaltigen $C_2$-$C_6$-Alkylrest, X Wasserstoff, Chlor, $C_1$-C2-Alkyl, $C_1$-$C_2$-Alkoxy, Y Wasserstoff, Chlor, $C_1$-$C_2$-Alkyl, $C_1$-$C_2$-Alkoxy oder Trifluormethyl bedeuten.

2. Monoazopigmente gemäss Anspruch 1, worin R den Rest $-CH_2CF_3$ bedeutet.

3. Monoazopigmente gemäss Ansprüchen 1 und 2, worin X eine Methylgruppe bedeutet.

4. Monoazopigment gemäss den Ansprüchen 1-3, worin Y ein Chloratom bedeutet.

5. Monoazopigment gemäss Ansprüchen 1-4, worin sich die COOR-Gruppe in p-Stellung zu X befindet.

6. Monoazopigment gemäss Ansprüchen 1-5, worin R den Rest $-CH_2CF_3$, X die Methylgruppe und Y ein Chloratom bedeuten.

7. Verfahren zur Herstellung von Monoazopigmenten gemäss Anspruch 1, dadurch gekennzeichnet, dass man

a) die Diazoverbindung eines Amins der Formel

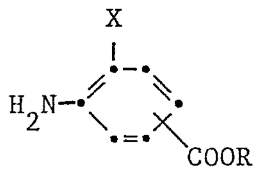

2)

mit einem Naphthol der Formel

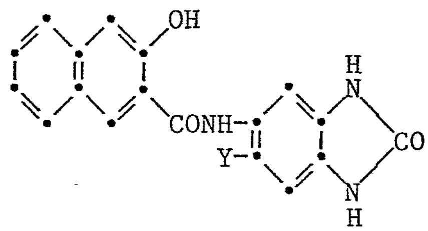

3)

kuppelt, oder

b) ein Azocarbonsäurechlorid der Formel

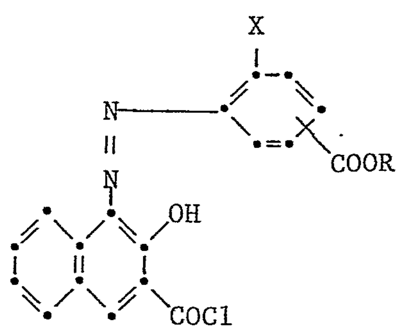

4)

mit einem Amin der Formel

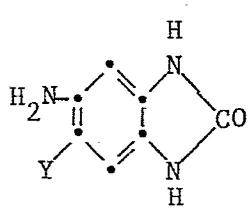

5)

kondensiert.

8. Verfahren gemäss Anspruch 7 a), dadurch gekennzeichnet, dass man von einem Amin ausgeht, worin R den Rest $-CH_2CF_3$ bedeutet und die Gruppe COOR in p-Stellung zu X steht.

9. Verfahren gemäss Ansprüchen 7 a) und 8, dadurch gekennzeichnet, dass man von einem Amin ausgeht, worin X eine Methylgruppe bedeutet.

10. Verfahren gemäss Ansprüchen 7 a) bis 9, dadurch gekennzeichnet, dass man von einem Amin ausgeht, worin Y Chlor bedeutet.

11. Verfahren gemäss Anspruch 7 a) bis 10, dadurch gekennzeichnet, dass man die Diazoverbindung eines Amins der Formel 2, worin R die Gruppe $-CH_2CF_3$ und X die Methylgruppe bedeutet, mit einem Naphthol der Formel 3) kuppelt, worin Y ein Chloratom bedeutet.

12. Hochmolekulares organisches Material enthaltend ein Monoazopigment gemäss Anspruch 1.

Europäisches Patentamt

# EUROPÄISCHER RECHERCHENBERICHT

Nummer der Anmeldung

EP 83 81 0081

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| Y | FR-A-2 393 031 (CIBA GEIGY) * Seite 1, Formel I; Seite 5, Formel V; Seite 18, Absatz 3 * | 1,7,12 | C 09 B 29/20<br>C 09 B 43/32 //<br>C 09 B 29/01<br>C 08 K 5/23 |
| Y | FR-A-1 577 061 (HOECHST) * Seite 1, ganz; Seite 2, Zeilen 32-38 * | 1,7,12 | |
| Y | EP-A-0 031 798 (CIBA GEIGY) * Seiten 1-3, ganz * | 1,7,12 | |

RECHERCHIERTE SACHGEBIETE (Int. Cl. 3)

C 09 B 29/00
C 09 B 43/00

Der vorliegende Recherchenbericht wurde für alle Patentansprüche erstellt.

| Recherchenort | Abschlußdatum der Recherche | Prüfer |
|---|---|---|
| DEN HAAG | 07-06-1983 | GREEN C.H. |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03.82